**Europäisches Patentamt**

(19) **European Patent Office**

**Office européen des brevets**

(11) Veröffentlichungsnummer: **0 110 904**

**B1**

(12) # EUROPÄISCHE PATENTSCHRIFT

(45) Veröffentlichungstag der Patentschrift:
**17.12.86**

(21) Anmeldenummer: **83901577.3**

(22) Anmeldetag: **01.06.83**

(86) Internationale Anmeldenummer:
**PCT/CH 83/00070**

(87) Internationale Veröffentlichungsnummer:
**WO 83/04419 (22.12.83 Gazette 83/29)**

(51) Int. Cl.⁴: **C 21 C 1/10**, B 22 D 41/06,
C 22 B 9/10

(54) **GIESSEINRICHTUNG INSBESONDERE KONVERTER ZUM VERGIESSEN UND/ODER ZUM NACHBEHANDELN VON GESCHMOLZENEM METALL.**

(30) Priorität: **07.06.82 CH 3497/82**

(43) Veröffentlichungstag der Anmeldung:
**20.06.84 Patentblatt 84/25**

(45) Bekanntmachung des Hinweises auf die Patenterteilung:
**17.12.86 Patentblatt 86/51**

(84) Benannte Vertragsstaaten:
**AT BE CH DE FR GB LI LU NL SE**

(56) Entgegenhaltungen:
**DE-A-1 815 214**
**DE-A-2 216 796**
**DE-B-1 207 554**
**DE-C-166 488**
**GB-A-338 013**

**Stahl und Eisen, 94, No. 14, 4 Juli 1974, Düsseldorf (DE) "Verwendung von metallischem Magnesium bei der Herstellung von GuBeisen mit Kugelgraphit", Seite 647**

(73) Patentinhaber: **GEORG FISCHER AKTIENGESELLSCHAFT, Mühlentalstrasse 105, CH- 8201 Schaffhausen (CH)**

(72) Erfinder: **MUTSCHLECHNER, Hermann, Schlöglstrasse 15, A-6060 Hall i.T (AT)**
Erfinder: **PLATZER, Herbert, Brucknerstrasse 14, A-6020 Innsbruck (AT)**
Erfinder: **PAVLOVSKY, Rudolf, Plattenweg 53, CH-8200 Schaffhausen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft eine Einrichtung zum Vergiessen und/oder zum Nachbehandeln von geschmolzenem Metall, wie sie im Oberbegriff von Anspruch 1 gekennzeichnet ist.

Bei diesen Einrichtungen ist es notwendig, den Konverter im Laufe der Behandlung in verschiedene Lagen bzw. Positionen zu kippen.

Solche Einrichtungen werden für Verfahren verwendet, bei welchen verdampfbare Zusätze einer Schmelze, insbesondere Magnesium, einer Eisen-Kohlenstoffschmelze beigegeben werden, wobei die Verdampfung der Zusätze durch die Kippbewegung des Giessbehälters eingeleitet wird.

Bekannt ist eine Kippvorrichtung für einen Induktionsofen (DE-B-1207554) mit zwei Kippdrehpunkten. Die Kippdrehpunkte werden durch Steckzapfen gebildet, die wechselweise als Achse in hierfür Vorgesehene Schwenklager eingesetzt werden.

Diese bekannte Vorrichtung weist den Nachteil auf, dass sie im Aufbau kompliziert und teuer ist. Zudem ist die Umstellung auf eine andere Kippbewegung relativ zeitraubend und umständlich.

Eine Einrichtung der eingangs genannten Art ist durch die DE-C-166 bekannt geworden, bei welcher die Pfanne an zwe Seilpaaren aufgehängt ist, wobei eines an einem Drehzapfen angelenkt ist und das andere um segmentförmige Führungsstücke gelegt und dann an der Pfanne befestigt ist. Für jedes der Seilpaare ist ein Antrieb erforderlich, wobei mittels der unabhängig voneinander wirkenden Antriebe die Pfanne zugleich gehoben und gekippt oder nur gehoben oder gekippt werden kann. Diese Einrichtung ist nur zum Vergiessen und nicht zum Nachbehandeln von geschmolzenem Metall geeignet und durch die beiden Antriebe sehr aufwendig.

Im weiteren ist durch die GB-A-338103 ein kippbarer Giessofen bekannt geworden, welcher an einer Kippachse angelenkt mittels eines an einem, eine Kippkurve aufweisenden Kipparmes angreifenden Kettenzuges um die eine Achse in einem bestimmten Bewegungsablauf kippbar ist. Durch Kippen nur um die eine Kippachse ist diese Einrichtung nicht ein Kipp-Konverter zur Nachbehandlung einer Schmelze wie eingangs beschrieben geeignet.

Aufgabe der Erfindung ist es, eine Einrichtung der eingangs genannten Art vorzuschlagen, die das Kippen einer Konverterpfanne in verschiedene Lagen bzw. Positionen auf einfache, mechanische Art ermöglicht, die Wartung erleichtert und wirtschaftlich im Betrieb ist.

Diese Aufgabe wird durch die Lehre des Anspruches 1 gelöst.

Weitere vorteilhafte Ausgestaltungen gehen aus den abhängigen Ansprüchen hervor.

Ein Ausführungsbeispiel der Erfindung ist in den Zeichnungen dargestellt und wird im folgenden anhand der Figuren näher beschrieben.

Es zeigen:

Fig. 1 eine Seitenansicht, in Einfüllstellung des Konverters,

Fig. 2 eine Seitenansicht, in Behandlungsstellung des Konverters,

Fig. 3 eine Seitenansicht, in Leerungsstellung des Konverters,

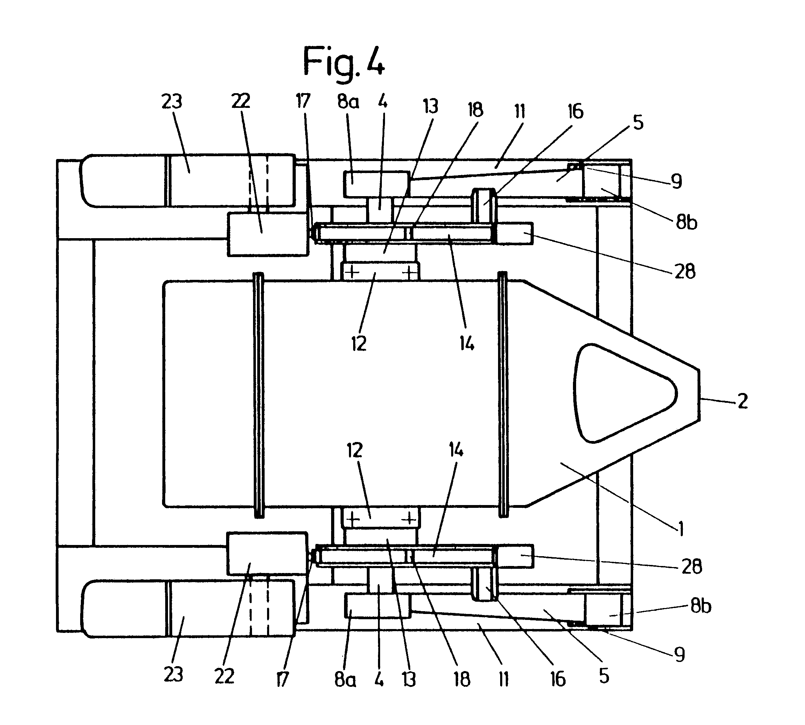

Fig. 4 eine Draufsicht auf die Giesselnrichtung, und

Fig. 5 eine Hinteransicht der Giesseinrichtung.

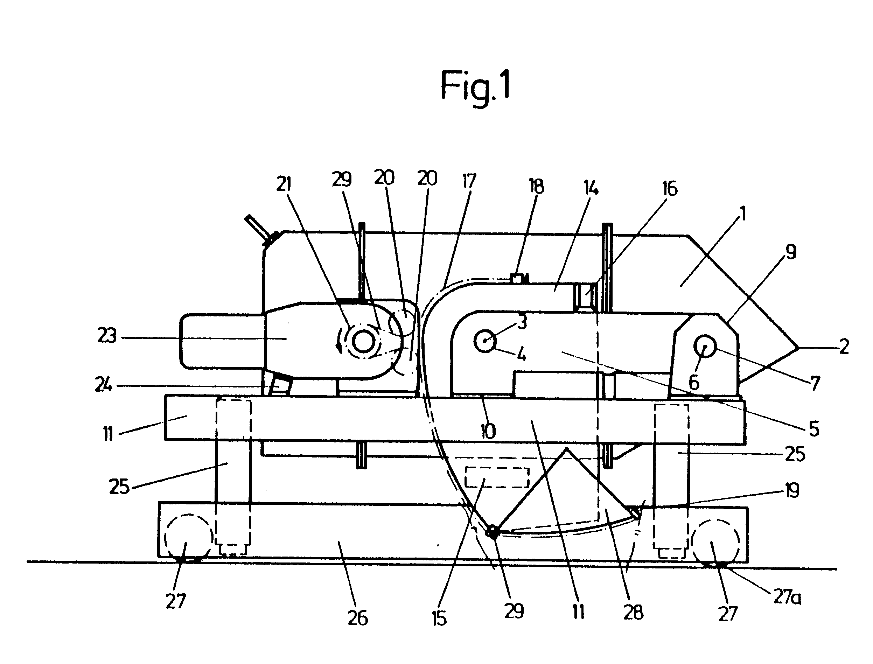

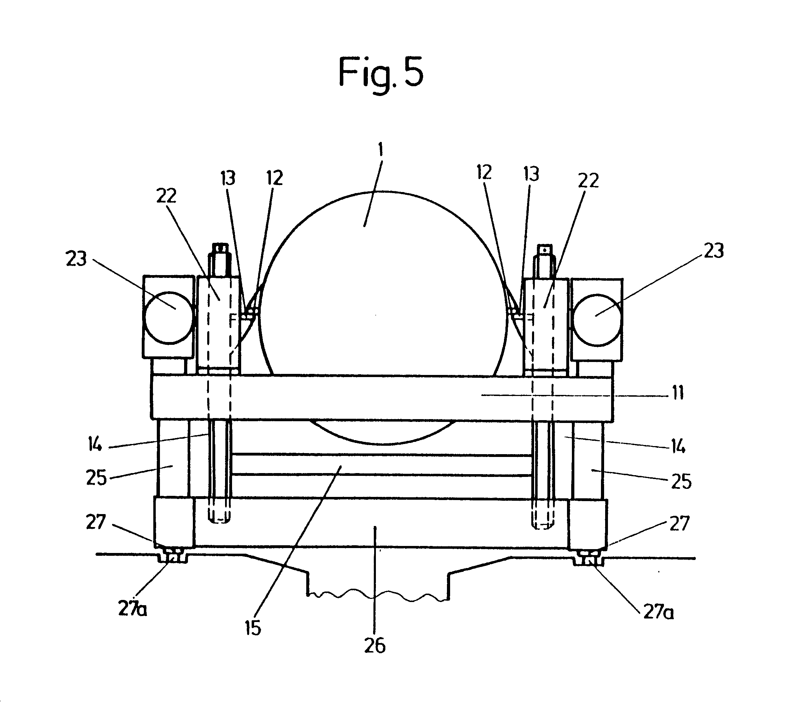

Die Figur 1 zeigt einen Konverter 1 in Einfüllstellung der beidseits über die Konverterhalterungen 12 (Fig. 5) mit den Tragkonsolen 13 der Führungssegmente 14, z.B. mit Schrauben verbunden ist.

Der Antrieb erfolgt beidseits mit den Antriebsböcken 22 und Motoren 23 die auf einem höhenverstellbaren Rahmen 11 angeordnet sind. Es sind Höhenverstellmechanismen 25 vorgesehen. Die Einrichtung ruht auf Rädern 27 und ist über Schienen 27a verfahrbar.

Ein Kippmechanismus weist mindestens einen Kipparm 5 auf der mit seinem Lagergehäuse 8b mittels des Bolzens 7 eine ortsfeste Dreh-Kippachse 6 in der Nähe der Konverterschnauze 2 hat. Der Kipparm 5 weist weiter eine zusätzliche von der ortsfesten Achse 6 beabstandete Kippachse 3 auf. Ein Segment 14 ist mit dem Bolzen 4 im Lagergehäuse 8a des Kipparmes 5 gelagert und stützt sich über eine Segmentstütze 16 am Kipparm 5 ab. Entlang des Segmentes ist eine Kette 17 gespannt, die über Umlenkrollen 20 und Antriebsritzel 21 geführt ist. Mittels eines Motors 23 und des Antriebbockes 22, die auf dem höhenverstellbaren Rahmen 11 angeordnet sind, wird das Segment 14 motorisch angetrieben.

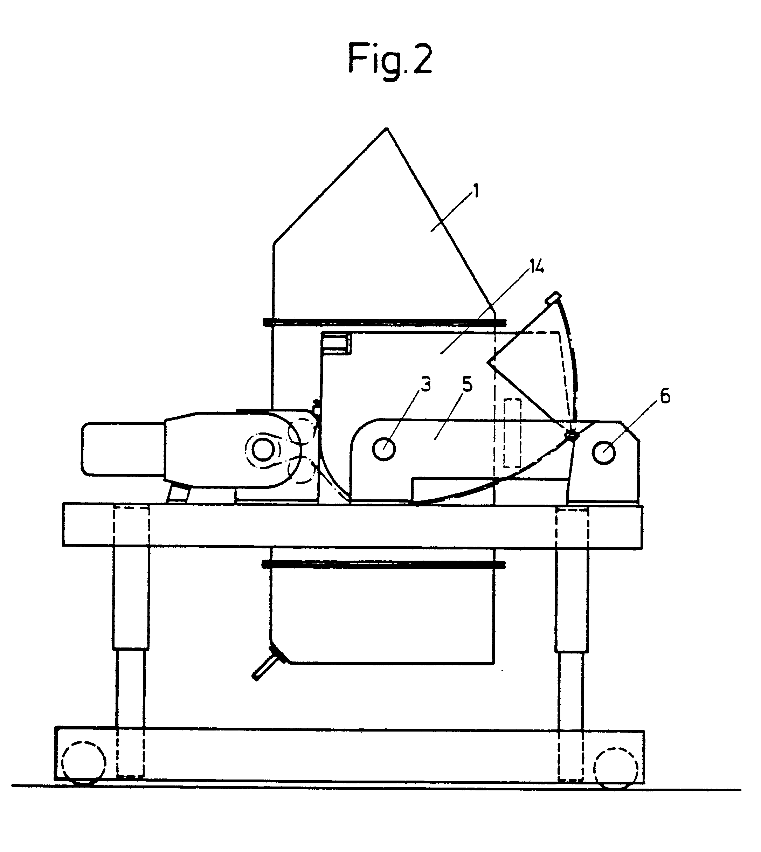

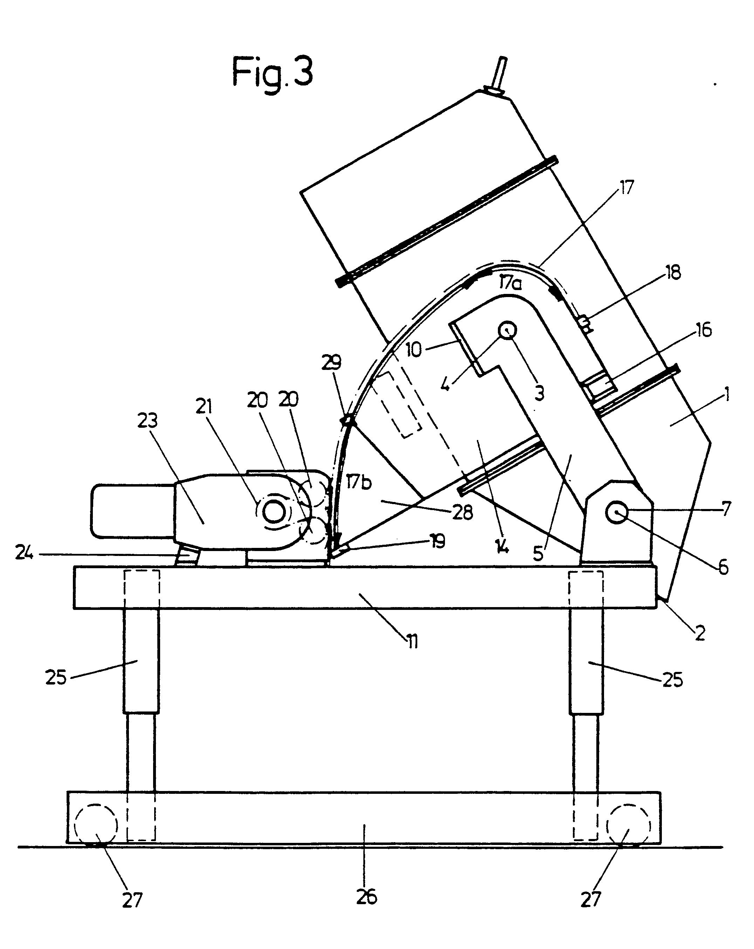

Die Kette 17 ist zwischen den Punkten 18 und 19 aufgespannt. Das Segment 14 weist zwei verschiedene Radien auf, die von der jeweiligen Kippachse 3 bzw. 6 zum Segmentbogen 17a, 17b bestimmt werden. Dadurch kann man die Konverterpfanne 1 um ihren Schwerpunkt in der Achse 3 mit dem kleinen Radius gemäss dem Segmentbogen 17a (Fig. 2), sowie im Bereich der Konverterschnauze (Fig. 3) mit dem grossen Radius gemäss dem Segmentbogen 17b um die Achse 6 drehen.

Die beiden Segmente 14 werden mit einem oder mehreren Distanzrohren 15 zusammengehalten.

Die Konverterpfanne 1 mit ihren Lagerungen und ihren beiden Antrieben ist am D-förmigen Rahmen 11 montiert.

Der Funktionsablauf geht wie folgt vor sich:

Nach erfolgter Einfüllung der Konverterpfanne 1, wird die Konverterpfanne 1 in die senkrechte Behandlungslage geschwenkt. Durch Einstellen der Drehrichtung der Motoren 23 in Gegenuhrzeigersinn (Fig. 1) wird die Behandlungslage nach Fig. 2 erreicht, wobei die Konverterpfanne 1 um die Achse 3 dreht. Nach Ablauf der Behandlungszeit wird die Konverterpfanne 1 in die waagrechte Lage zurückgeschwenkt. Um die Pfanne in die waagrechte Lage zurückzuschwenken wird die Drehrichtung der Motoren 23 in Uhrzeigersinn umgeschaltet. Im Augenblick der Berührung der Segmentstützen 16 mit den Kipparmen 5 heben sich die Kipparme 5 mit ihren Auflageflächen 10, falls die Motoren 23 weiterdrehen, vom Rahmen 11 ab und damit wird das Kippen der Konverterpfanne 1 um die Achse 6 eingeleitet und die Entleerungsphase beginnt.

Das Segment ist an der Stelle 29 abknickbar, so dass bei Bedarf eine tiefere Absenkung der Einfüllschnauze 2 auf die Höhe des Ofens möglich wird. Damit werden insbesondere Wärmeverluste vermieden, weil eine direkte Füllung des Konverters aus einem Ofen möglich ist, unter Vermeidung von üblichen Transport- bzw. Zwischenpfannen.

Es ist möglich anstelle der Kette 17 eine Verzahnung an den Segmenten 14 vorzusehen. In diesem Fall würde das Ritzel 21 in die Verzahnung direkt eingreifen.

## Patentansprüche

1. Einrichtung zum Vergiessen und/oder zum Nachbehandeln von geschmolzenem Metall, bestehend aus mindestens einer kippbaren Konverterpfanne und mindestens aus einem, mit der Pfanne fest verbundenen Kettenführungssegment, wobei das Kettenführungssegment mittels mindestens einer, das Kettenführungssegment umspannenden Kette angetrieben ist und wobei das Kettenführungssegment (14) zwei Segmentbögen (17a, 17b) mit unterschiedlichen Radien aufweist, dadurch gekennzeichnet, dass das Kettenführungssegment (14) mit mindestens einem, mit zwei Lagerungen (8a, 8b) versehenen Kipparm (5) verbunden ist, wobei die ortsfeste Achse (6) der Lagerung (8b) des Kipparmes (5) dem grösseren Radius des Segmentbogens (17b) entspricht und dass die Kippachse (3) der vertikal beweglichen Lagerung (8a) des Kettenführungssegmentes (14) dem kleineren Radius des Segmentbogens (17a) zugeordnet ist.

2. Einrichtung nach Anspruch 1, dadurch gekennzeichnet, dass ein Teilder Kette (17) um einen Antriebsritzel (21) eine Schlaufe bildet.

3. Einrichtung nach Anspruch 1, dadurch gekennzeichnet, dass der dem grösseren Radius zugeordnete Segmentbogen (17b) einknickbar ist.

4. Einrichtung nach Anspruch 1, dadurch gekennzeichnet, dass beidseitig an der Einrichtung Führungssegmente (14) angeordnet sind.

5. Einrichtung nach den Ansprüchen 1 bis 4, dadurch gekennzeichnet, dass sie auf einem höhenverstellbaren Rahmen (11) befestigt ist.

## Claims

1. Apparatus for casting and/or aftertreating molten metal, comprising at least one tiltable converter ladle and at least one chain guidance segment fixed to the ladle, the chain guidance segment being driven by at least one chain spanning the said segment and the chain guidance segment (14) having two segmental arcs (17a, 17b) with different radii, characterized in that the chain guidance segment (14) is connected to at least one tilting arm (5) provided with two bearings (8a, 8b), the fixed shaft (6) of the bearing (8b) of tilting arm (5) corresponding to the larger radius of the segmental arc (17b) and that the hinge pin (3) of the vertically movable bearing (8a) of the chain guidance segment (14) is associated with the smaller radius of the segmental arc (17a).

2. Apparatus according to claim 1, characterized in that part of the chain (17) forms a loop around a driving pinion (21).

3. Apparatus according to claim 1, characterized in that the segmental arc (17b) associated with the larger radius can be bent in.

4. Apparatus according to claim 1, characterized in that guidance segments (14) are arranged on both sides of the apparatus.

5. Apparatus according to claims 1 to 4, characterized in that it is fixed to a vertically adjustable frame (11).

## Revendications

1. Dispositif de coulée et/ou de post-traitement de métal fondu, constitué par au moins une poche de convertisseur basculante et au moins un segment de guidage à chaîne (14), solidaire de la poche, entraîné par au moins une chaîne qui le recouvre et présentant deux segments (17a, 17b) de rayon différent, ledit dispositif étant caractérisé en ce que le segment de guidage à chaîne (14) est relié à au moins un bras basculeur (5) comportant deux paliers (8a, 8b), l'axe fixe (6) du palier (8b) du bras basculeur (5) correspondant au plus grand rayon de l'arc (17b) du segment; et l'axe de basculement (3) du palier (8a) mobile-verticalement du segment de guidage à chaîne (14) est affecté au plus petit rayom de l'arc (17a) du segment.

2. Dispositif selon revendication 1, caractérisé en ce qu'une partie de la chaîne (17) forme une boucle autour d'un pignon moteur (21).

3. Dispositif selon revendication 1, caractérisé en ce que l'arc (17b) du segment affecté au plus grand rayon est pliable.

4. Dispositif selon revendication 1, caractérisé par des segments de guidage (14) de part et d'autre du dispositif.

5. Dispositif selon une quelconque des revendications 1 à 4, caractérisé par sa fixation sur un cadre (11) réglable verticalement.

# Fig.1

0 110 904

# Fig.2

# Fig.3

Fig. 4

Fig.5